# EUROPEAN PATENT APPLICATION

(11) **EP 0 952 026 A2**
(43) Date of publication of application: **27.10.1999**
(21) Application number: 99107979.9
(22) Date of filing: 22.04.1999
(51) Int. Cl.: B60K 17/16, B66C 23/62

(54) **Wheeled crane**

(30) Priority: 23.04.1998 JP 11377698; 23.04.1998 JP 11377798
(71) Applicant: KABUSHIKI KAISHA KOBE SEIKO SHO also known as Kobe Steel Ltd., Kobe 651-0072 (JP)
(72) Inventor: Ichida, Kunihiro, c/o Okubo Plant, Kobe Steel Ltd., Akashi-shi, Hyogo 674-0063 (JP); Gotoh, Hideki, c/o Okubo Plant, Kobe Steel Ltd., Akashi-shi, Hyogo 674-0063 (JP); Kawashima, Ichiro, c/o Okubo Plant, Kobe Steel Ltd, Akashi-shi, Hyogo 674-0063 (JP)
(74) Representative: Leson, Thomas Johannes Alois, Dipl.-Ing.

(57) **Abstract**

A wheeled crane with an easily manufactured construction to lower a height of the vehicle body while securing a sufficient rigidity of the frame and improving riding comfort. The wheeled crane in which a wheel support portion (19) for rotatably supporting a wheel (18R) is suspended vertically movably with respect to the frame of the body. Left and right output shafts of a rear differential gear (36) and the wheel (18R) are connected relatively displaceably through a drive shaft (50), and the drive shaft (50) extends through a branch portion (16) in a direction of vehicle width.

## Description

### BACKGROUND OF THE INVENTION

The present invention relates to a wheeled crane prodded with running wheels.

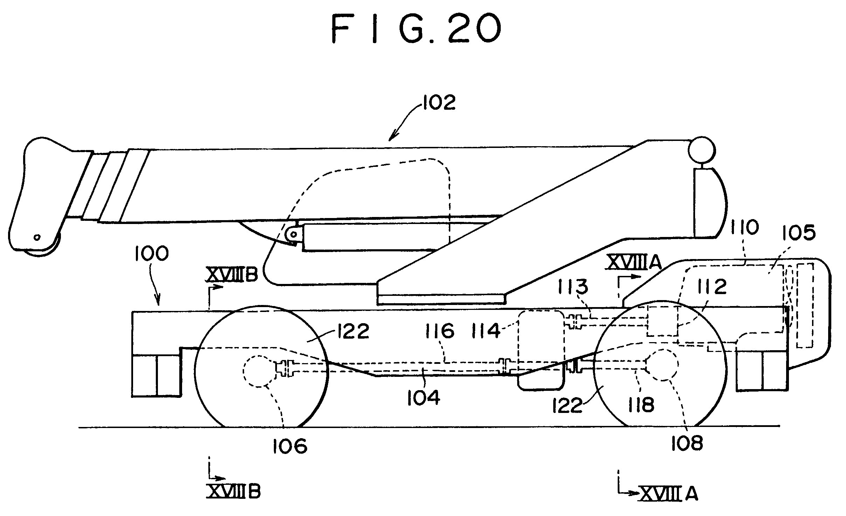

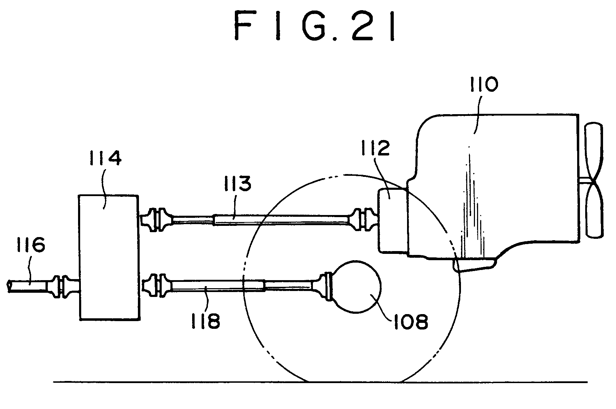

FIGS. 20 to 22 show a example of a conventional wheeled crane.

This wheeled crane comprises a lower running body 100 capable of running on the road, and an upper rotating body 102 having a boom and the like. The lower running body 100 is provided with a body frame 104 extending longitudinally, and the upper rotating body 102 is rotatingly installed on the central portion in a longitudinal direction of the body frame 104.

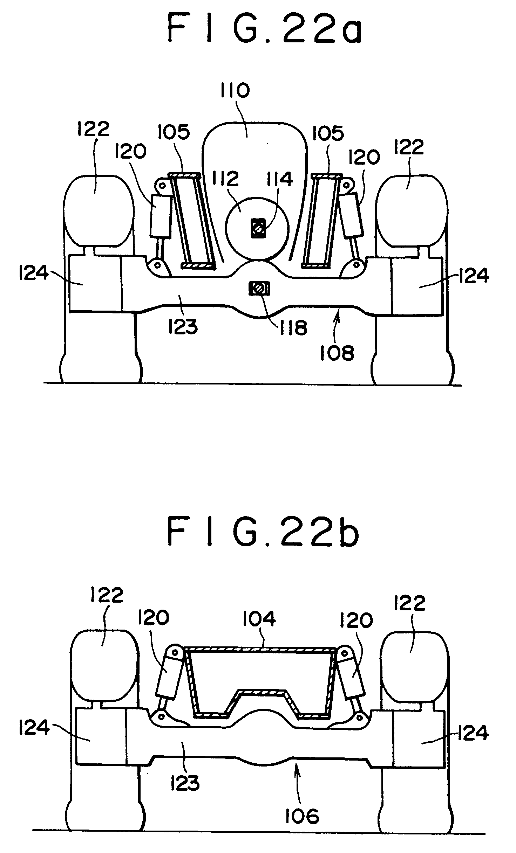

The rear portion of the body frame 104 is formed with branch portions 105 branched in a bifurcate fashion to left and right as shown in FIG. 22a, between which branch portions 105 are disposed an engine 110 and a torque converter 112. An output shaft of the torque converter 112 is directed forward and is connected to an input shaft of a forward transmission 114 through a universal joint and a driving shaft 113. An output shaft of the transmission 114 is projected longitudinally from a mission case, the front projecting portion being connected to a front axle 106 through a universal joint and a driving shaft 116 extending longitudinally and while the rear projecting portion being connected to a rear axle 108 through a universal joint and a driving shaft 118 extending longitudinally.

Each of axles 106 and 108 is in the form in which a tubular housing 123 extending in a lateral direction and a pair of left and right wheel supporting portions 124 for rotatably supporting rotational shafts of wheels 122 are integrally connected, and a central differential device connected to the driving shaft 116 (118) and a transmission shaft for connecting left and right output shafts of the differential device and the rotational shaft of the wheel 122 are inserted into the housing 123. The body frame 104 is disposed on the axles 106 and 108, the body frame 104 and the axles 106, 108 being connected through a substantially vertically expansible buffer cylinder 120, the axles 106 and 108 being suspended relatively vertically movably on the body frame 104.

Since in the above-described conventional construction, the body frame 104 is supported on the front and rear axles 106 and 108, the position of the center of gravity of the entire wheeled crane is so high that the running stability is disadvantageous. Further, since the height of the entire crane is so great that there is also inconvenience that is liable to receive limitation in height in a job side or in a moving road between the job sites.

So, as means for overcoming these inconveniences as noted above, the following publications have been known.
A) Japanese Patent Application Laid-Open No. 9-39645 Publication: Both side walls of the body frame in the form of a box in cross-section are provided with through-holes, into which the wholly integrated axle similar to the axles 106 and 108 is inserted. That is, the entire axle is extended through the body frame widthwise of the body. According to this construction, the position of height and the position of the center of gravity of the body frame can be lowered as compared with the constitution in which the entire body frame is arranged above the axles.
B) Japanese Patent Application Laid-Open No. 9-30272 Publication: The body frame is of a shape having a u-shape in section opened downward, and a cross member is secured internally thereof, on which is suspended a differential device. An output shaft of the differential device is positioned to be lower than the lower surface of the body frame, and an axle is connected to the output shaft through an axle driving shaft comprising a universal joint.

The above-described A) construction has a problem to be solved as follows:
(1) The entire axle including a tubular housing is very large and heavy, and the operation of extending the axle through the body frame is not easy. Accordingly, the manufacturing is extremely difficult.
(2) For extending the entire axle through the body frame as described above, a through-hole that is further larger than the tubular housing should be provided. Accordingly, in the normal frame construction, sufficient rigidity and strength cannot be secured, and actually, there involves an inconvenience that the frame need be larger in size and a complicated sectional shape need be provided.
(3) Since the differential device and the entire axle having a transmission shaft inserted into the tubular housing should be suspended on the body frame, the suspension weight is extremely great. Accordingly, the pressure when running on the rugged road is so severe that pleasant riding cannot be obtained.

On the other hand, in the above-described B) construction, the axle is connected to the output shaft of the differential device through the driving shaft (transmission shaft). For placing the transmission shaft under the body frame, the lower surface of the body frame should be made higher than the transmission shaft and the output shaft of the differential device connected thereto. Accordingly, there involves a remarkable restriction to lower the position of height of and the position of the center of gravity of the body frame.

It is therefore an object of the present invention to provide a wheeled crane capable of solving the problems as noted above.

### SUMMARY OF THE INVENTION

For solving the above-described problem, the present invention provides a wheeled crane in which a wheel support portion for rotatably supporting a wheel is suspended vertically movably with respect to a body frame, wherein one end of a transmission shaft extending in a lateral direction is connected so as to be variable in relative angle to left and right output shafts of a differential device to which power is transmitted from an engine, said wheel being connected so as to be variable in relative angle to the other end of said transmission shaft, and said differential device is arranged so that at least a part of the transmission shaft extends through the side wall of said body frame in a direction of vehicle width.

It is to be noted that said "wheel" need not be all wheels of a vehicle but the construction according to the present invention can be applied, for example, to only the front wheel or only the rear wheel.

In this construction, the left and right output shafts and the left and right wheels of the differential device are connected relatively vertically rotatably through the transmission shaft, during which the differential device is secured to the body frame, and said transmission shaft is made to extend through the side wall of the body frame in a direction of vehicle width. Therefore, the body frame can be disposed in a lower position than that of prior art. For example, it is possible to position the lower frame of the body frame to a height equal to the lower surface of the differential device or lower than the lower surface of the differential device. Thereby, it is possible to lower a position of the center of gravity of the whole crane to reduce a height dimension. Further, only the wheel and the wheel support portion are suspended on the body frame, which is therefore small in suspension weight as compared with prior art in which the whole axle is suspended on the body frame. On the other hand, since only the differential device is secured to the body frame, the construction is simple.

Moreover, the whole axle including the tubular housing is not made to extend through the body frame as in prior art, but only the transmission shaft can be made to extend through the body frame, and therefore, the manufacturing is simple. A through-hole provided in the body frame will suffice to be small, and remarkable lowering of rigidity and lowering of strength will not result.

It is to be noted that the transmission shaft extending through the body frame need not be all the transmission shafts provided on the vehicle, and for example, in the case where the transmission shafts are connected to both front wheel and rear wheel, only the transmission shaft connected to the front wheel or only the transmission shaft connected to the rear wheel can be made to extend through the body frame.

Further, if at least one end of the front and rear of the body frame serves as a branch portion branched to left and right, and the engine and the differential device are disposed between the branch portions so that the transmission shaft extends through the branch portion, the position of the engine and the body frame can be further lowered, and the running stability is further enhanced.

In this wheeled crane, a buffer cylinder which is expansible in a direction substantially parallel with the vertical direction may be interposed between the body frame and the wheel support portion. In this case, if the wheel support portion and the body frame are connected through a support arm capable of being swung vertically but whose horizontal swinging is controlled, the horizontal relative displacement of the wheel support portion with respect to the body frame is controlled by the support arm whereby the burden in terms of strength on the buffer cylinder can be relieved.

The buffer cylinder is directed substantially vertically. It is natural that in order that the buffer cylinder is interposed between the body frame and the wheel support portion without placing the former in contact with the ground, the buffer cylinder is disposed at a position above the support arm. In this case, however, a bending moment acting on the buffer cylinder is maximum at a position of the center axis of the wheel. Accordingly, more preferably, in this construction, the cylinder body which is more advantageous in strength than the expansible rod is secured on the side of the wheel support portion to be located below, and the expansible rod is connected on the side of the body frame to be located above. With this, the sufficient rigidity can be secured while making the cylinder small in diameter. Accordingly, a clearance between the inner end of a tire and the buffer cylinder can be widened, as a result of which the cylinder can be arranged to be substantially stood upright whereby the burden in terms of strength on the buffer cylinder at the time of steering can be further relieved.

It is general that in the buffer cylinder, a pipe is connected to the cylinder body. However, in the case where the cylinder body is secured on the side of the wheel support portion as described above, the cylinder body rotates in a steering direction together with the wheel, and therefore, when the pipe is connected to the cylinder body, the movement of the pipe increases. On the other hand, a communication passage for communicating the inner chamber of the cylinder with the outside is formed on the side of the expansible rod in which rotation does not occur, and a external pipe is connected to the communication passage whereby the movement of the pipe can be suppressed and the connecting state can be well maintained for a long period,

Further, alternatively, power of the engine is transmitted to the differential device through a speed change gear, and the input shaft of the differential device is connected directly to the speed change gear. Here, the output shaft of the speed change gear and the input shaft of the differential device may be composed of a single shaft. Further, alternatively, the output shaft of the engine or the output shaft of the torque converter connected to the first mentioned output shaft is connected directly to the input shaft of the speed change gear, and the engine of the torque converter is arranged directly above the differential device.

By the constitution as described above, it is possible to reduce the number of parts to render the arrangement compact.

### BRIEF DESCRIPTION OF THE DRAWING

FIG. 1 is a side view of a wheeled crane according to a first embodiment of the present invention;
FIG. 2a is a sectional view taken on line IIA-IIA of FIG. 1, and FIG. 2b is a sectional view taken on line IIB-IIB of FIG. 1;
FIG. 3 is a plan view of the wheeled crane according to the first embodiment;
FIG. 4 is a sectional view of a buffer cylinder provided on the wheeled crane according to the first embodiment;
FIG. 5a is a sectional view of a suspension construction in a wheeled crane according to a second embodiment; and FIG. 5b is a bottom view thereof;
FIG. 6 is a sectional view showing a spherical bearing provided on the construction shown in FIGS. 5a and 5b;
FIG. 7a is a diagram of a bending moment with respect to the buffer cylinder shown in FIGS. 2a and 2b, and FIG. 7b is a diagram of a bending moment with respect to the buffer cylinder shown in FIGS. 5a and 5b;
FIGS. 8a and 8b are respectively sectional views showing an internal construction of the buffer cylinder shown in FIGS. 5a and 5b;
FIG. 9 is a sectional view showing a sectional shape of a body frame of a wheeled crane according to a third embodiment of the present invention;
FIG. 10 is a plan view showing a suspension construction on the front wheel side of a wheeled crane according to a fourth embodiment of the present invention;
FIG. 11 is a sectional front view showing the suspension construction on the front wheel side shown in FIG. 10;
FIG. 12 is a side view showing a caster angle in the suspension construction on the front wheel side shown in FIG. 10;
FIG. 13 is a sectional view showing a suspension construction on the rear wheel side of the wheeled crane according to the fourth embodiment of the present invention;
FIG. 14 is a sectional view showing a suspension construction on the front wheel side of a wheeled crane according to a fifth embodiment of the present invention;
FIG. 15 is a sectional view showing a suspension construction on the rear wheel side of the wheeled crane according to the fifth embodiment of the present invention;
FIG. 16 is a side view of a wheeled crane according to a sixth embodiment of the present invention;
FIG. 17 is a sectional view taken on line II-II of FIG. 16;
FIG. 18 is a plan view of the wheeled crane according to the sixth embodiment;
FIG. 19 is a side view of a power transmission system provided at the rear of the wheeled crane according to the sixth embodiment;
FIG. 20 is a side view showing an example of a conventional wheeled crane;
FIG. 21 is a side view showing a driving and transmitting system mounted at the rear of the wheeled crane shown in FIG. 20; and
FIG. 22a is a sectional view taken on line XVIIIA-XVIIIA of FIG. 20, and FIG. 22b is a sectional view taken on line XVIIIB-XVIIIB of FIG. 20.

### DESCRIPTION OF THE PREFERRED EMBODIMENTS

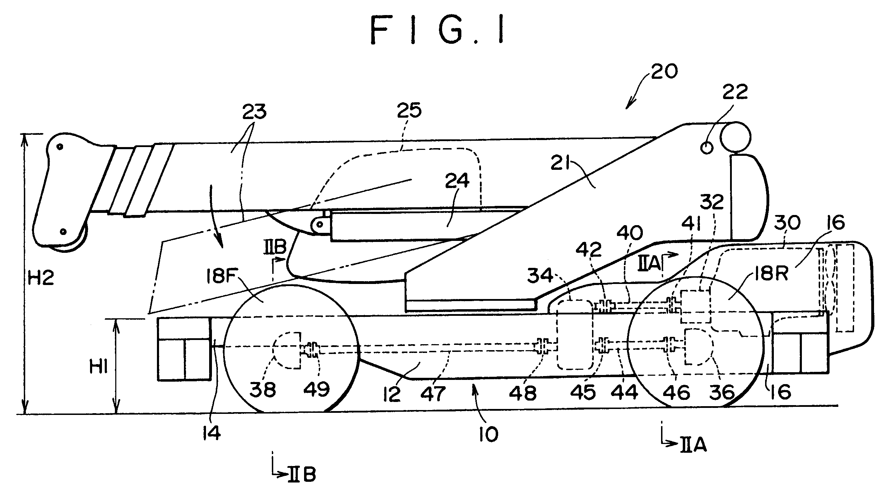

A first embodiment of the present invention will be described with reference to FIGS. 1 to 4.

A wheeled crane (a self-running type crane) shown in FIGS. 1 to 3 is provided with a lower running body 10 capable of running on the road. The lower running body 10 is provided with a body frame 12 extending longitudinally and an upper rotating body 20 is supported rotatingly about a vertical shaft through a ring-like bearing 11 on the intermediate portion in a longitudinal direction of the body frame 12. An operating chamber 25 and a rotating frame 21 are installed on the upper rotating body 20, and a boom 23 is supported to be risen and fallen through a horizontal boom foot pin 22 on the rotating frame 21, the boom 23 being driven in a rising and falling direction by expansion and contraction of a boom cylinder 24.

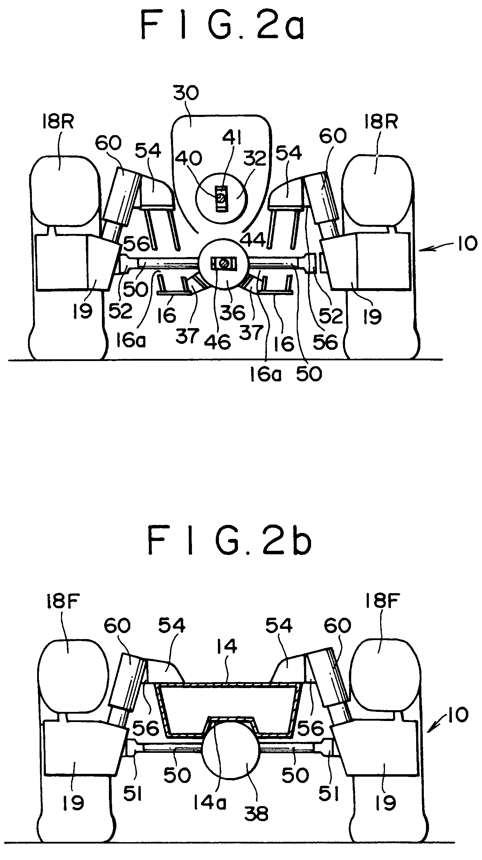

A front portion 14 of the body frame 12 has a laterally extending box-shaped section having a relatively small height direction as shown in FIG. 2b, while a rear portion thereof is branch portions 16 branched to left and right in a bifurcate fashion, as shown in FIG. 2a, each of the branch portions 16 having a longitudinally extending box-shaped section. A front wheel 18F and a rear wheel 18R are disposed on left and right sides of the body frame 12.

As the power transmission system, an engine 30, a torque converter 32, a transmission 34, and a rear differential gear 36 are disposed at the rear of the body frame 12, and a front differential gear 38 is disposed on the front portion 14 of the body frame 12.

As shown in FIG. 2a, the engine 30, the torque converter 32, and the rear differential gear 36 are disposed between both the branch portions 16. The engine 30 is secured to the body frame 12 through a bracket not shown with an output shaft thereof directed forward. The torque converter 32 is connected directly to the output shaft of the engine, and the rear differential gear 36 is positioned thereunder, the rear differential gear 36 being connected and secured to the lower portions of both the branch portions 16 through left and right brackets 37. The transmission 34 is positioned forward of the branch portions 16, and secured in a recess (not shown) formed so as to be recessed upward in the central portion of the body frame. Further, as shown in FIG. 2b, the front differential gear 38 is secured in a recess 14a formed in the lower surface of the front portion 14 of the frame

An input shaft of the transmission 34 is projected rearward from the upper portion of the mission case and connected to an output shaft of the torque converter 32 through the longitudinal drive shaft 40. More specifically, the rear end of the drive shaft 40 is connected so as to be variable in relative angle through a universal joint 41 to the output shaft of the torque converter 32 while the front end thereof is connected so as to be variable in relative angle to the input shaft of the transmission 34 through a universal joint 42.

The output shaft of the transmission 34 extends through the mission case longitudinally, and both ends thereof project longitudinally. The front end of the longitudinally extending drive shaft 44 is connected so as to be variable in relative angle through a universal joint 45 to the rear end of the output while the rear end of the drive shaft 44 is connected so as to be variable in relative angle to the input shaft of the differential gear 36 through a universal joint 46. On the other hand, the front end of the transmission 34 is connected so as to be variable in relative angle through a universal joint 43 to the rear end of the drive shaft 47 extending longitudinally under the central portion of the body frame 12, and the front end of the drive shaft 47 is connected so as to be variable in relative angle to the input shaft of the front differential gear 38 through a universal joint 49.

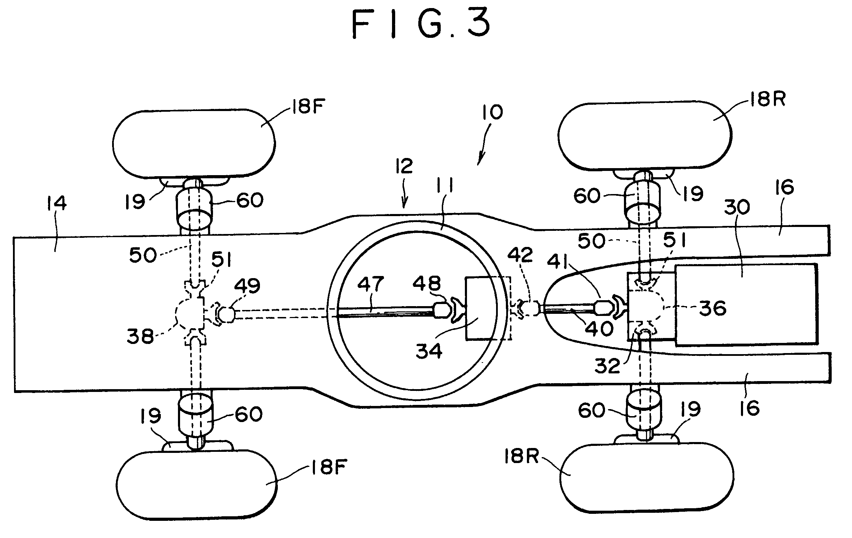

The left and right output shafts of the front and rear differential gears 36 and 38 are connected so as to be variable in relative angle of the inner end of a drive shaft 50 through a universal joint 51 (shown only in FIG. 3). On the other hand, the rotational shafts of the front wheel 18F and the rear wheel 18R are rotatably supported on the wheel support portion 19, and the outer end of the drive shaft 50 is connected to these rotational shafts so as to be variable in relative angle through a universal joint 52.

The drive shaft 50 connected to the output shaft of the rear differential gear 36 extends through a through-hole 16a provided in the inner and outer side walls of the branch portions 16 in a lateral direction (in a direction of wheel width) as shown in FIG. 2a, and the drive shaft 50 connected to the output shaft of the front differential gear 38 passes immediately under the body frame 14 as shown in FIG. 2b.

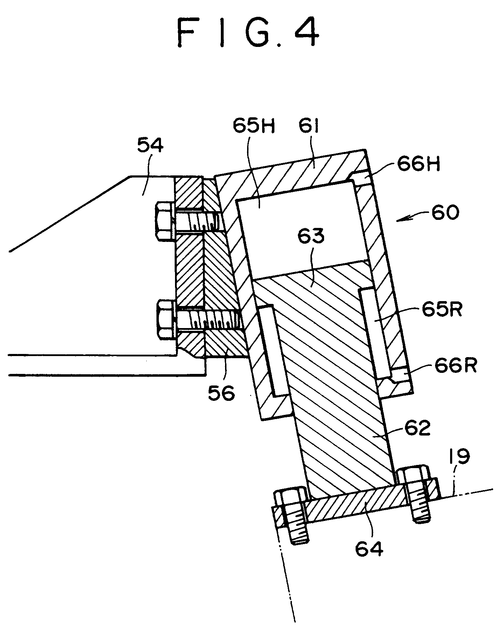

Each wheel support portion 19 is connected relatively vertically movably to the branch portion 16 and the front portion 14 of the body frame 12 through a buffer cylinder 60. As shown in FIG. 4, each buffer cylinder 60 has a large-diameter cylinder body 61 and an expansible rod 62 extending downward from a piston 63 inserted into the cylinder body. The cylinder body 61 is connected to the upper portion (FIG. 2a) of the branch portion 16 and the upper portion (FIG. 2b) of the branch portion 16 through a bracket 56 and a bracket 54 while the lower end of the expansible rod 62 is connected to the upper surface of the wheel support portion 19 through a connecting plate 64. The whole buffer cylinder 60 has its center shaft which assumes an attitude slightly inclined with respect to the vertical shaft (more specifically, an attitude in which the upper end is inclined toward the inside), the center shaft matching a steering rotational center of the wheels 18F and 18R.

In the above construction, only the differential gears 36 and 38 of the axle are secured to be body frame 12, and the differential gears 36 and 38 and the wheels 18F and 18R are connected so as to be relatively displaceable by the drive shaft 50. Therefore, the height dimension H1 of the body frame 12 and the height dimension H2 of the boom shown in FIG. 1 can be effectively lowered as compared with the prior art in which the body frame is supported on the axle whose entirely is integrated using a large-diameter tubular housing. Particularly, the rear differential gear 36 along with the engine 30 are dispose between the branch portions 16 and the drive shaft 50 connected to the differential gear 36 is made to extend through the branch portions 16, as shown in FIG. 2a, whereby the height position of the body frame 12 can be further lowered. Moreover, the whole axle including the housing is not made to extend through as in Japanese Patent Application Laid-Open No. 9-39645 Publication but only the small-diameter drive shaft 50 may be made to extend through the body frame 12. Therefore, the through-hole 16a for the extending-through will suffice to be small, and accordingly the rigidity of the body frame 12 can be highly maintained.

Further, in the case where for the purpose of maintaining the performance of operation at the high level, only the body frame 12 is lowered in position and the height position of the boom foot pin 22 is maintained at the height position equal to that of prior art, a degree of lowering forward the boom 23 in the state in which the boom is received can be enhanced (see the dash-dotted contour lines in FIG. 1), and the field of vision from the operator's chamber 25 can be improved.

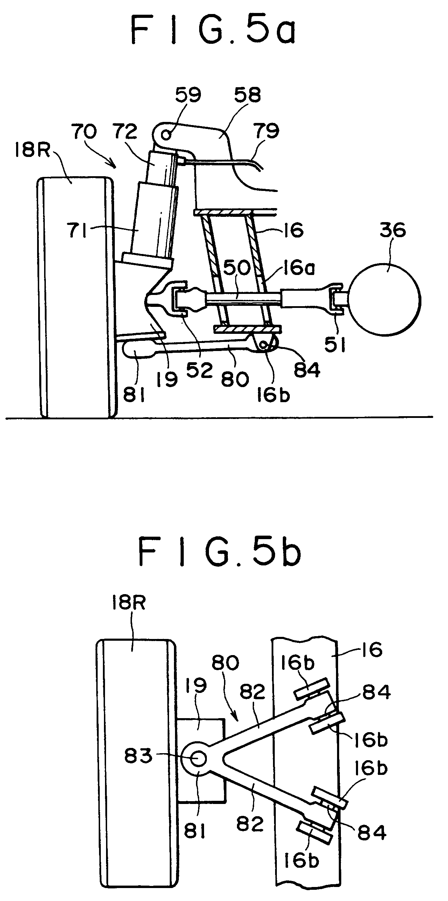

However, in this construction, since the body frame 12 and the wheel support portion 19 are connected by only the buffer cylinder 60, a burden in terms of strength on the buffer cylinder 60 is relatively large. On the other had, if a construction as shown in FIGS. 5a and 5b showing a second embodiment is employed, a burden in terms of strength on a buffer cylinder 70 can be reduced.

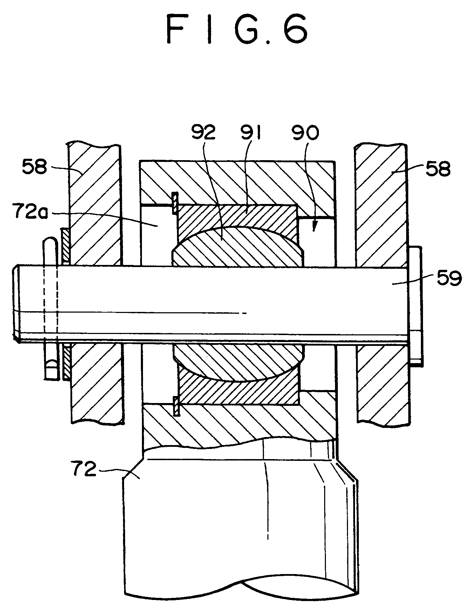

In the construction shown in FIGS. 5a and 5b, a cylinder body 71 of the buffer cylinder 70 is secured to the upper surface of the wheel support portion 19, and the upper end of an expansible rod 72 is connected so as to be variable in relative angle to the branch portion 16 of the body frame 12 (the same is true for the front portion 14). More specifically, a pair of front and rear brackets 58 also as shown in FIG. 6 are secured in a fixed spaced relation to the body frame 12, and a pin 59 is secured so as to extend through the brackets 58. On the other hand, the expansible rod 72 is provided at the upper end thereof with a through-hole 72a larger in diameter than the pin 59, and a spherical bearing 90 is interposed between the inner peripheral surface of the through-hole 72a and the outer peripheral surface of the pin 59. The spherical bearing 90 comprises an outer portion 91 secured to the inner peripheral surface of the through-hole 72a, and an inner portion 92 secured to the outer peripheral surface of the pin 59, which contact in the spherical surface. Accordingly, the brackets 58 and the expansible rod 72 are variable in relative angle in a suitable direction.

On the other hand, the lower surface of the wheel support portion 19 and the lower surface of the branch portion 16 are connected through a swinging arm 80. The swinging arm 80 comprises a ring-like base 81 and arm body portions 82 extending in a longitudinal bifurcate fashion from the base 81, and the base 81 is connected to the lower surface of the wheel support portion 19 so as to be variable in relative angle by a spherical bearing 83 similar to the spherical bearing 90 while the end of each arm body portion 82 is connected so as to be variable in relative angle to the lower surface of the branch portion 16a through a pin 84 and a spherical bearing (not shown) similar to the spherical baring 90. The buffer cylinder 70 is disposed so that a straight line for linking the spherical bearing 83 with the spherical bearing 90, a center shaft of the buffer cylinder 70 and a steering rotational center shaft are substantially matched.

According to the above construction, in order that the swinging arm 80 may control displacement of the wheel 18R (the same is true for the wheel 18F) with respect to the body frame 12 in a horizontal direction, a bending load acting on the buffer cylinder 70 is reduced by that portion so that a burden in terms of strength on the buffer cylinder 70 is reduced.

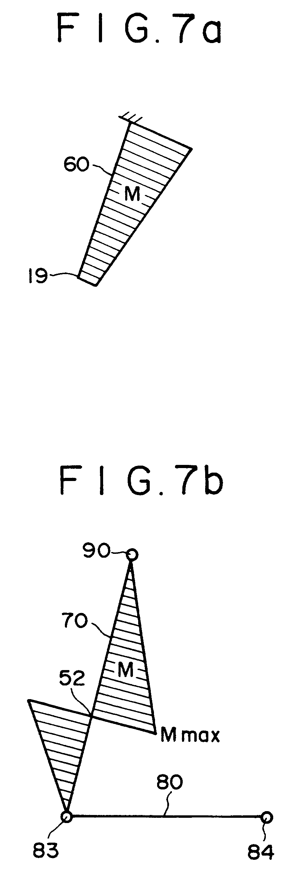

The direction of the buffer cylinder 60 and 70 is changed in the construction shown in FIGS. 2a and 2b and the construction shown in FIGS. 5a and 5b in consideration of a difference in a distribution of a bending moment in the constructions. That is, in the construction shown in FIGS. 2a and 2b, the wheel support portion 19 is supported merely by the buffer cylinder 60, and since the buffer cylinder 60 is in a cantilever state as shown in FIG. 7a, a bending moment M of the buffer cylinder 60 is large closer to the fixed end (upper end). So, the cylinder body 61 that is higher in bending rigidity than the expansible rod 62 is arranged at the upper part. On the other hand, in the construction shown in FIGS. 5a and 5b, since both the ends are in a simple beam state of both the ends supported to be variable in angle by the spherical bearings 90 and 83 as shown in FIG. 7b, a bending moment M is the maximum value Mmax at a position of the wheel support portion 19 which receives rotation from the wheel (tire), and is gradually reduced as the position moves upward. So, the cylinder body 71 of high strength is directed downward and the expansible rod 72 is directed upward.

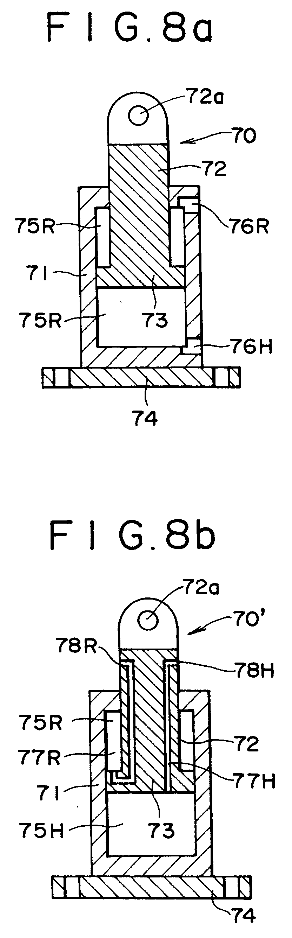

In the case of the latter, on the cylinder body 71 side can be provided a head side port 76H leading to a head side chamber 75H and a rod side port 76R leasing to a rod side chamber 75R, similar to a general cylinder, as shown in FIG. 8a. However, since the cylinder body 71 is secured to the wheel support portion 19 and performs the steering rotation along with the wheel support portion 19, when a piping is connected to the ports 76H and 76R of the cylinder body 71, the piping has to move following the cylinder body 71, and the reliability of the piping connection lowers accordingly. On the other hand, if oil paths 77H and 77R leading to the head side chamber 75H and the rod side chamber 75R, respectively, are formed on the expansible rod 72 side not performing the steering rotation, as shown in FIG. 8b, and a piping 79 as shown in FIG. 5a is connected to the head side port 78H and the rod side port 78R which are outer openings, the connection reliability can be enhanced.

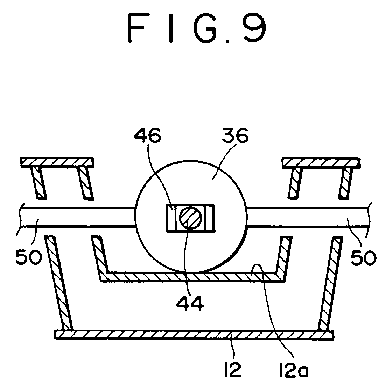

FIG. 9 shows a third embodiment. In the present invention, in the case where the drive shaft 50 is made to extend through the body frame 12 as shown in FIG. 2a, the extending-through portion need not always be the branch portion 16 as shown in FIG. 2a, and in the third embodiment, a differential gear 36 (or 38) is arranged within an upward recess 12a formed in the body frame 12, and a drive shaft 50 is made to extend through both side walls of the frame surrounding the differential gear 36 (38) in a lateral direction.

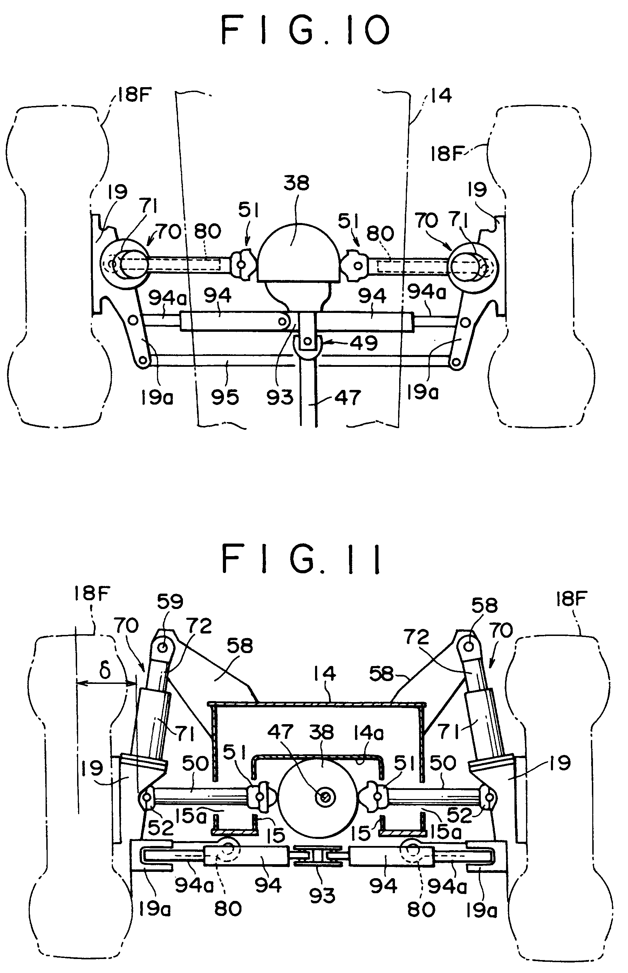

FIGS. 10 to 13 show a fourth embodiment.

According to the present invention, since employment of an independent suspension without lowering frame rigidity is easy, various concrete suspension systems can be applied, whereby the running performance can be also enhanced. As an example thereof, the present embodiment shows an employment of a so-called MacFarson system as a suspension system for the front wheels 18F and 18R.

In the drawing, similar to the second embodiment, each wheel support portion 19 is connected to the bracket 58 on the body frame side through the buffer cylinder 70, and in addition, a link portion 19a is extended rearward from the wheel support portion 19, the rear ends are link-coupled together by means of a link 95, and an intermediate portion of the wheel support portion 19 is link-coupled to a common central member 93 through an expansible cylinder 94. The expansible cylinders 94 are each urged in an extending direction.

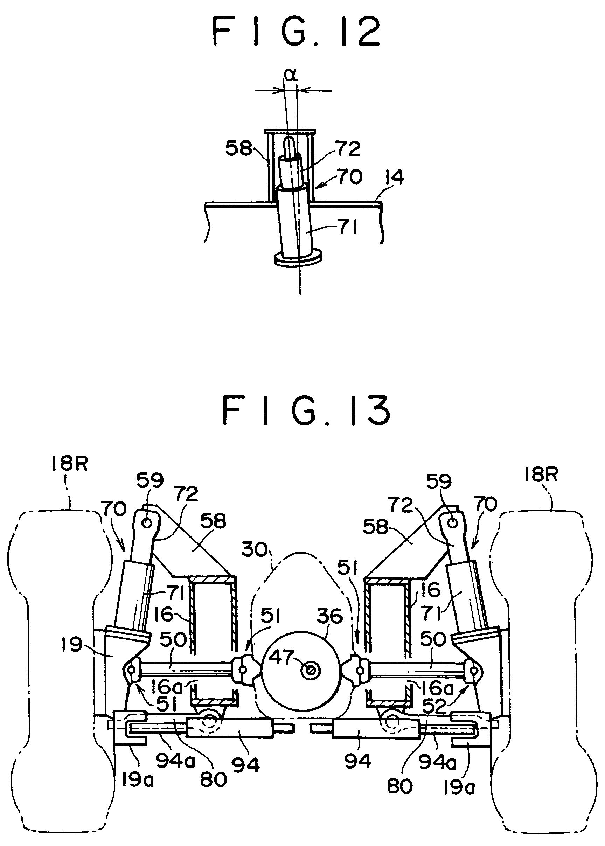

In this system, the burden on the buffer cylinder 70 can be further reduced and made small in diameter as compared with the construction shown in the second embodiment. In addition, a king pin offset δ at a wheel center shown in FIG. 11 can be made small to reduce a tire occupying space at the time of steering, and a caster angle α shown in FIG. 12 can be made large to enhance the running performance.

In this embodiment, the sectional shape of the front portion 14 of the body frame is a shape in which the lower central portion has a recess 14a recessed upward, and a front differential gear 38 is incorporated into the recess 14a. The drive shaft 50 for linking the front differential gear 38 with the left and right wheel support portions 19 is arranged so as to extend through a through-hole 15a provided in the side wall 15 surrounding the recess 14a.

As described above, in the present invention, even if the sectional shape of the body frame is made to have a shape in the form of a downward recess, it is possible to effectively reduce the height of frame.

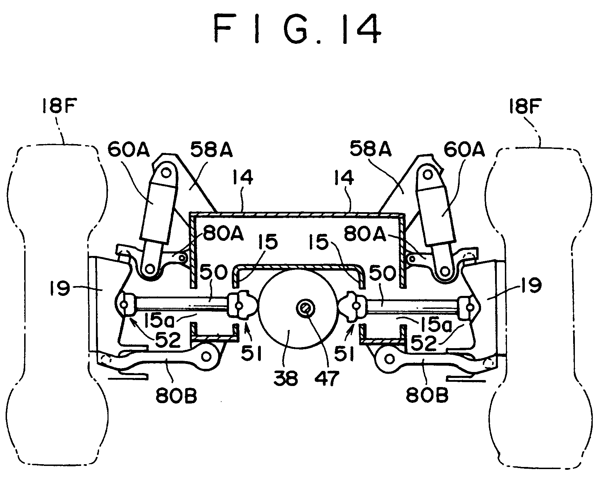

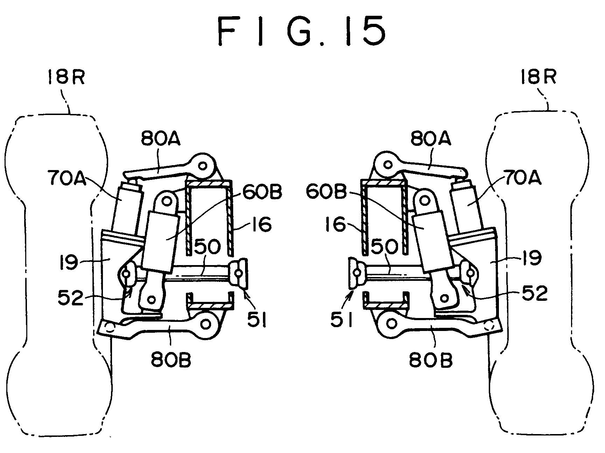

FIGS. 14 and 15 show a fifth embodiment. Here, as a suspension system for the front and rear wheels 18F and 18R, a so-called double wishbone system is employed.

In this construction, as swinging arms for connecting the wheel support portion 19 with the body frame, an upper arm 80A and a lower arm 80B are prepared. In the front wheel suspension shown in FIG. 14, a buffer cylinder 60A is interposed between an intermediate portion of the upper arm 80A and a bracket 58A on the front portion 14A side of the body frame. In the rear wheel suspension shown in FIG. 15, an upper buffer cylinder 70A is interposed between an outer end of the upper arm 80A and the wheel support portion 19, and a lower buffer cylinder 60B is interposed between the side portion of the branch portion 16 and the wheel support portion 19.

Also in this system, the burden in terms of strength on each buffer cylinder can be reduced to make a diameter thereof small, and the excellent running performance can be obtained as compared with prior art.

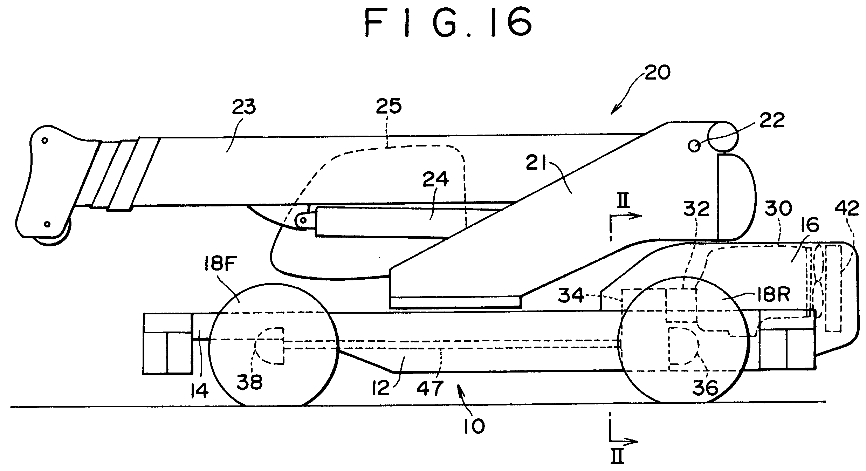

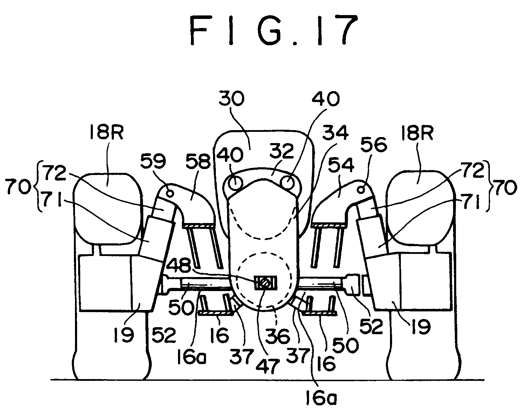

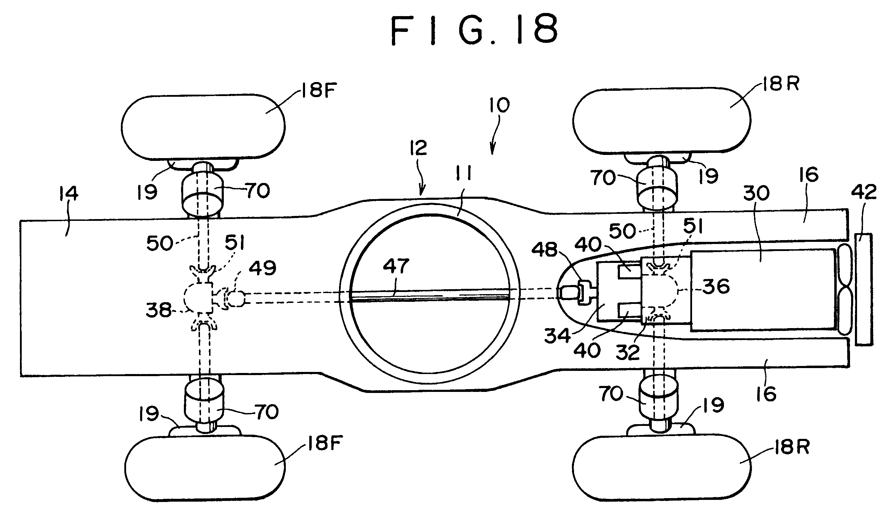

FIGS. 16 to 19 show a sixth embodiment. Parts common to those shown in FIGS. 1 to 3 are indicated by common reference numerals.

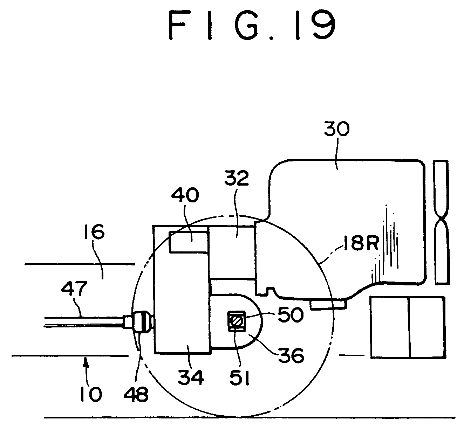

In this embodiment, as a power transmission system, an engine 30, a torque converter 32, a transmission (a speed change gear and a distributor) 34 and a rear differential gear 36 are disposed at the rear of a body frame 12, as shown in FIG. 19. A front differential gear 38 is disposed on the front portion 14 of the body frame 12. A rotational output of the engine 30 is input into the transmission 34 through the torque converter 32, which is distributed from the transmission 34 to the front and rear differential gears 36 and 38.

As shown in FIGS. 16 to 19, a plurality of hydraulic pumps driven making use of engine power are connected to the torque converter 32, and hydraulic oil for driving a boom and an out-rigger jack is fed under pressure from the hydraulic pumps 40. The hydraulic pumps 40 are secured to the front side of the torque converter 32 in a state projected from the front side, and provided on the upper end of the transmission in a compact arrangement.

According to a feature of the crane, an output shaft of the torque converter 32 and an input shaft of the transmission 34 are composed of a single shaft 33, so that a rotational output of the torque converter 32 is transmitted, as it is, to the transmission 34 through the shaft 33. Further, a rear output shaft of the transmission and an input shaft of the rear differential gear 36 are also composed of a single shaft 35, so that a rotational output of the transmission 34 is transmitted, as it is, to the differential gear 36 through the shaft 35. On the other hand, a front output shaft 46 of the transmission 34 is connected so as to be variable in relative angle through a universal joint 48 to the rear end of a drive shaft 47 which runs longitudinally under the central portion of the body frame 12, and the front end of the drive shaft 47 is connected so as to be variable in relative angle to the input shaft of a front differential gear 38 through a universal joint 49. The front differential gear 38 is secured within a recess formed in the lower surface of the front portion 14 of the frame.

It is noted that in place of the constitution as described above that the output shaft of the torque converter 32 and the input shaft of the transmission 34 are composed of the single shaft 33, and the output shaft of the transmission 34 and the input shaft of the rear differential gear 36 are composed of the single shaft 35, even if the output shaft of the torque converter 32 and the input shaft of the transmission 34 are directly connected by a coupling or the like and the output shaft of the transmission 34 and the input shaft of the rear differential gear 36 are likewise directly connected, the number of parts can be reduced, and the layout can be compacted.

If the shaft is singularized as described above, the number of parts can be further reduced, the distance between the torque converter and the transmission or the distance between the transmission and the rear differential gear can be further shortened; and as the case may be, the housing of the torque converter and the housing of the transmission can be integrated and the housing of the transmission and the housing of the rear differential gear can be integrated.

As described above, in the construction according to this embodiment, since the output shaft of the torque converter 32 and the input shaft of the transmission 34 are composed of the single shaft 33, and the output shaft of the transmission 34 and the input shaft of the rear differential gear 36 are composed of the single shaft 35, the number of parts can be reduced and the compact arrangement can be provided as compared with the construction in which the shafts are connected using a drive shaft. Further, the distance between the differential gear 36 and the transmission 34 is shortened, as a result of which the position of the transmission 34 can be moved rearward from the central position in the longitudinal direction of the vehicle body in prior art, the burden in terms of strength on the body frame 12 at the central position can be relieved, and the transmission 34 together with the engine 30 and the rear differential gear 36 can be arranged between the branch portions 16 to make the layout of the power transmission system ideal.

It is also possible for the present invention to employ the following embodiments as examples.
(1) While in FIG. 1, the engine 30 is mounted at the rear of the body frame 12, it is to be noted that the present invention can be applied also to the constitution in which the engine 30 is mounted on the front portion thereof. In this case, the front portion of the body frame 12 is made to serve as the branch portion to secure an installation space for the engine 30.
(2) While in FIG. 1, a 4-wheeled crane is shown, it is to be noted that in the present invention, for example, a 6-wheeled crane may be employed irrespective of the number of wheels. Further, the suspension construction according to the present invention may not be applied with respect to all the wheels, but the construction according to the present invention can be applied, for example, to only the front wheel or only the rear wheel.

As described above, the present invention provides a wheeled crane in which a wheel support portion for rotatably supporting a wheel is suspended vertically movably with respect to a body frame, wherein one ends of transmission shafts extending in a lateral direction are connected so as to be variable in relative angle to left and right output shafts of a differential device to which power is transmitted from the engine, and the transmission shafts are extended through in a direction of vehicle width with respect to the side wall of the body frame. Therefore, as compared with prior art, the body frame can be disposed to a lower position with respect to the differential device whereby the position of the center of gravity of the whole crane can be lowered and the height dimension can be reduced. Further, only the wheels and the wheel support portion are suspended on the body frame, and the suspension weight can be reduced to improve the riding comfortableness as compared with the conventional constitution in which the whole axle is suspended on the body frame. On the other hand, since only the differential device is secured to the body frame, the manufacturing is simple. Moreover, as compared with the conventional constitution in which the wholly integrated axle is made to extend through the body frame, a very small through-hole that should be provided in the body frame to allow the transmission shaft to extend therethrough will suffice, and the high frame rigidity can be maintained.

A wheeled crane that has a construction easily manufactured, and lowers a height of the vehicle body while securing a sufficient rigidity of the flame to improve a riding comfortableness. The wheeled crane in which a wheel support portion 19 for rotatably supporting a wheel 18R is suspended vertically movably with respect to the frame of the body. Left and right output shafts of a rear differential gear 36 and the wheel 18R are connected relatively displaceably through a drive shaft 50, and the drive shaft 50 extends through a branch portion 16 in a direction of vehicle width. (FIG. 2)

## Claims

1. A wheeled crane in which a wheel support portion for rotatably supporting a wheel is suspended vertically movably with respect to a body frame, characterized in that one end of a transmission shaft extending in a lateral direction is connected so as to be variable in relative angle to left and right output shafts of a differential device to which power is transmitted from an engine, said wheel being connected so as to be variable in relative angle to the other end of said transmission shaft, and said differential device is arranged so that at least a part of the transmission shaft extends through the side wall of said body frame in a direction of vehicle width.

2. The wheeled crane according to Claim 1, wherein the lower surface of said body frame is positioned at a height equal to the lower surface of said differential device or to be lower than the lower surface of the differential device.

3. The self-running type crane according to Claim 1 or 2, wherein at least one end of the front and rear of said body frame serves as a branch portion branched to left and right, said engine and said differential device are disposed between said branch portions, and said transmission shaft extends through said each branch portion.

4. The wheeled crane according to any of Claims 1 to 3, wherein a buffer cylinder which is expansible in a direction substantially parallel with a vertical direction is interposed between said body frame and said wheel support portion.

5. The wheeled crane according to Claim 4, wherein said wheel support portion and said body frame are connected through a support arm capable of being swung vertically and whose horizontal swinging is controlled.

6. The wheeled crane according to Claim 5, wherein said buffer cylinder is disposed at a position above said support arm, a cylinder body of said buffer cylinder is secured on the side of said wheel support portion, and an expansible rod is connected on the side of the body frame.

7. The wheeled crane according to Claim 6, wherein a communication passage for communicating an inner chamber of the cylinder with the outside is formed in a expansible rod of said buffer cylinder, and an external pipe is connected to said communication passage.

8. The wheeled crane according to Claim 1, wherein power of the engine is transmitted to said differential device through a speed change gear, and an input shaft of said differential device and an output shaft of said speed change gear are connected directly.

9. The wheeled crane according to Claim 8, wherein the output shaft of said speed change gear and the input shaft of said differential device are composed of a single shaft.

10. The wheeled crane according to Claim 8 or 9, wherein the output shaft of said engine or the output shaft of the torque converter connected to the first-mentioned output shaft and the input shaft of said speed change gear are connected directly, and said engine or said torque converter is arranged directly above said differential device.

11. The wheeled crane according to Claim 10, wherein the output shaft of said engine or the output shaft of the torque converter connected to the first-mentioned output shaft and the input shaft of said speed change gear are composed of a single shaft.

12. The wheeled crane according to Claim 10 or 11, wherein a hydraulic pump driven by power of said engine is disposed at a position lined with said speed change gear.
